# EUROPEAN PATENT APPLICATION

(11) **EP 4 317 235 A1**
(43) Date of publication of application: **07.02.2024**
(21) Application number: 22774642.7
(22) Date of filing: 27.01.2022
(51) Int. Cl.: C08G 59/20, C09D 11/101, C09D 11/104, C08G 63/12, C08G 63/48

(54) **POLYESTER RESIN, ACTIVE ENERGY RAY-CURABLE INK COMPOSITION CONTAINING SAME, AND METHOD FOR PRODUCING SAME**

(30) Priority: 22.03.2021 JP 2021047339; 19.08.2021 JP 2021134182
(71) Applicant: Sakata INX Corporation, Osaka-shi, Osaka 550-0002 (JP)
(72) Inventor: OMI Naoki, Osaka-shi, Osaka 550-0002 (JP); YOKOYAMA Yuka, Osaka-shi, Osaka 550-0002 (JP); SAITO Kota, Osaka-shi, Osaka 550-0002 (JP)
(74) Representative: V.O.
(86) International application number: PCT/JP2022/003048
(87) International publication number: WO 2022/201840

(57) **Abstract**

[Object]

To provide a resin for ink compositions that is usable in the preparation of active energy ray-curable ink compositions and that can increase a proportion of biomass-derived ingredients:

[Solution]

A polyester resin that is a condensation polymer of an acid ingredient including a fatty acid containing an epoxy group and a polybasic acid, and a polyhydric alcohol is employed, wherein the fatty acid has a peroxide value of 1 meq/kg or more in terms of triglyceride. Such a resin is prepared by a process for producing the polyester resin through heating a mixture containing an epoxidized oil or fat, a polybasic acid, and a polyhydric alcohol to subject to a transesterification reaction and a polycondensation reaction, wherein the epoxidized oil or fat has a peroxide value of 1 meq/kg or more.

## Description

### TECHNICAL FIELD

The present invention relates to a polyester resin and an active energy ray-curable ink composition containing such a polyester resin, as well as a process for producing such a resin and ink composition.

### BACKGROUND ART

In recent years, the activities for reductions in environmental loads have been developed in various industrial and business categories, and their common ultimate goal is to achieve the global environmental conservation. Also in the printing ink industry, the activities to promote reductions in environmental loads have been practiced from various viewpoints, and the ink products that comply with the gist of such activities are given various kinds of certification marks. Examples of such certification marks include an NL regulation mark, a vegetable oil ink mark, a GP mark, and a clione mark. In this situation, the Japan Printing Ink Makers Association has recently established a novel system called an ink green mark (hereinafter referred to as "IG mark"). The IG mark is based on the system where the level of environmental friendliness of the ink composition is categorized into three ranks depending on the rate of biomass-derived ingredients in all main ingredients that make up the ink composition as criteria of the mark. In other words, this system is characterized by promoting the replacement of fossil resource-derived raw materials with biomass-derived raw materials for the purpose of reductions in environmental loads.

In various fields of printing, a printing system has recently initiated to prevail that an ink composition present on the surface of printed matter is instantaneously dried through the irradiation of printed matter immediately after printing with active energy rays, such as ultraviolet rays and electron beams. The ink composition employed in such a printing system is designed to generate radicals in the ink composition upon the irradiation with active energy rays, and the ink composition further contains monomers or oligomers that react with these radicals into a higher molecular weight. Accordingly, the irradiation of printed matter with active energy rays after printing with this type of ink composition can cause the ink composition present on the surface of printed matter to be cured into a film, which is in a dry state. Ink products that are cured with ultraviolet rays among such ink compositions are called "UV ink", and, in particular, various products have been proposed in the field of offset printing involving high-rate printing (for example, see PTL 1).

Also in the field of UV inks, products that can be dried with a smaller dose of irradiation of ultraviolet rays and energy-saving products that can be dried with light from light-emitting diodes (LEDs), which consume less electric power, are commercially available, that is to say, the activities for reductions in environmental loads have been developed similar to other ink compositions. In this regard, PTL 2 discloses that further addition of epoxidized vegetable oil to an ink composition where an ingredient having ethylenically unsaturated bonds is cured through a radical polymerization system can enhance the curability with a low illuminance of ultraviolet rays. In view of the general knowledge that an epoxy compound has no radical polymerization ability, such results can be regarded as unexpected ones.

Although environmental responses focusing on the energy consumption during printing have been mainly promoted in the field of UV inks, other environmental responses, such as replacement of the raw materials with biomass-derived ingredients as described above, have not sufficiently progressed. This situation corresponds to not only to UV inks but also to electron beam-curable ink compositions, which situation is a common problem in active energy ray-curable ink compositions. This problem is caused by the ingredients required for the active energy ray-curable ink compositions. Since active energy ray-curable ink compositions require large amounts of monomers and oligomers as ingredients, the compositions cannot contain large amounts of biomass-derived ingredients. In the actual case, the criteria of certification for the IG mark do not include the proportion of biomass-derived ingredients, but include environmental characteristics, such as recyclability and energy saving, as indicators in place of such a proportion.

### CITATION LIST

### PATENT LITERATURES

PTL 1: JP 2014-173070A
PTL 2: JP 2018-115223A

### BRIEF DESCRIPTION OF THE INVENTION

### PROBLEMS TO BE SOLVED

Under the above background, an increase in proportion of biomass-derived ingredients is socially useful and has greatly high significance also in the active energy ray-curable ink compositions. However, the monomers and oligomers used in the active energy ray-curable ink compositions have poor compatibility with the biomass-derived materials used in general ink compositions; hence, conventional biomass-derived materials cannot be readily applied to such active energy ray-curable ink compositions in the current situation.

The present invention has been made in view of the above circumstances, and it is an object of the present invention to provide a resin for ink compositions that can be used in the preparation of active energy ray-curable ink compositions and that can increase the proportion of biomass-derived ingredients.

### MEANS TO SOLVE PROBLEMS

As a result of intensive studies to solve the problems described above, the present inventors have focused on oxidized vegetable oil, such as waste edible oil after being used in food processing of, for example, fried foods. Well known vegetable oil is a mixture of ester compounds of fatty acids and glycerol, and such fatty acids include unsaturated fatty acids, such as oleic acid and linoleic acid. In the case that such unsaturated fatty acids are placed in a high-temperature environment, for example, for processing of fried foods, oxygen is attached to some of the unsaturated bonds of fatty acids to generate hydroperoxide groups (i.e., -OOH) in the molecule. The hydroperoxide group is a highly polar substituent, as is obvious from its structure, thereby oxidized vegetable oil, such as waste edible oil, has higher polarity compared to fresh vegetable oil.

In the meantime, the active energy ray-curable ink composition contains, as a main ingredient, a compound having an ethylenically unsaturated bond so as to have curability. As such a compound having an ethylenically unsaturated bond, a compound having high polarity is generally selected, such as a (meth)acrylate ester compound. Accordingly, this type of ink composition has high polarity as a whole, and the oxidized vegetable oil, which is oil or fat having high polarity as described above, has superior compatibility with the active energy ray-curable ink composition, which is also a composition having high polarity. As is well known, triglycerides such as vegetable oils are also raw materials for polyester resin used as resins in ink compositions. Accordingly, if epoxy groups are incorporated into oxidized vegetable oil, such as waste edible oil, as disclosed in PTL 2 and such oxidized vegetable oil is used as raw material in the preparation of polyester resin, such polyester resin can be employed as a constituent usable in the preparation of ink compositions which has high polarity similar to the active energy ray-curable ink composition, in other words, has high compatibility with the active energy ray-curable ink composition, and is rich in biomass-derived ingredients. Furthermore, the waste edible oil can be used as the oxidized vegetable oil in the preparation of such polyester resin as described above, and the ink composition containing such polyester resin can further achieve decreases in environmental loads in terms of effective utilization of wastes. In addition, the studies by the present inventors demonstrate that the ink composition containing the polyester resin derived from the oxidized vegetable oil has high compatibility due to being each composed of high-polarity ingredients, superior flowability and high gloss on printed matter, thereby contributing to an improvement in processability for printing and production of high value-added printed matter. It should be noted that the characteristics where such oxidized fats or oils have high polarity are common to oils or fats (i.e., triglycerides and triglyceride-modified fatty acid ester compounds) in general including animal oils, in addition to vegetable oils. It is expected that all these oxidized oils or fats result in similar advantages, and such embodiments with these oils or fats can also be within the scope of the present invention. In this specification, "(meth)acrylate" indicates "acrylate and/or methacrylate", and "(meth)acrylic acid" indicates "acrylic acid and/or methacrylic acid".

The present invention has been completed based on such findings, and provides the following Aspects:
(1) The present invention provides a polyester resin that is a condensation polymer of an acid ingredient including a fatty acid containing an epoxy group and a polybasic acid, and a polyhydric alcohol, wherein the fatty acid has a peroxide value of 1 meq/kg or more in terms of triglyceride.
(2) The present invention also provides the polyester resin according to Aspect (1), wherein the acid ingredient further includes a resin acid.
(3) The present invention also provides an active energy ray-curable ink composition containing the polyester resin according to Aspect (1) or (2).
(4) The present invention also provides a process for producing a polyester resin through heating a mixture containing an epoxidized oil or fat, a polybasic acid, and a polyhydric alcohol to subject to a transesterification reaction and a polycondensation reaction, wherein the epoxidized oil or fat has a peroxide value of 1 meq/kg or more.
(5) The present invention also provides the process for producing a polyester resin according to Aspect (4), wherein the epoxidized oil or fat has an acid value of 0.1 mg KOH/g to 100 mg KOH/g.
(6) The present invention also provides the process for producing a polyester resin according to Aspect (4) or (5), wherein the epoxidized oil or fat has a peroxide value of 1 meq/kg to 1,000 meq/kg.
(7) The present invention also provides the process for producing a polyester resin according to any one of Aspects (4) to (6), wherein the epoxidized oil or fat has an oxirane oxygen concentration of 0.5% to 50%.
(8) The present invention also provides the process for producing a polyester resin according to any one of Aspects (4) to (7), wherein the mixture further contains a resin acid.
(9) The present invention also provides the process for producing a polyester resin according to any one of Aspects (4) to (8), wherein the epoxidized oil or fat is an epoxy-modified waste edible oil.
(10) The present invention provides a process for producing an active energy ray-curable ink composition by use of the polyester resin produced through the process according to any one of Aspects (4) to (9) as one of constituents of the ink composition.

### ADVANTAGEOUS EFFECTS OF THE INVENTION

The present invention provides a resin for ink compositions that is usable in the preparation of an active energy ray-curable ink composition and that can increase a proportion of biomass-derived ingredients.

### EMBODIMENTS OF THE INVENTION

According to the present invention, one embodiment of a process for producing a polyester resin, one embodiment of a polyester resin, one embodiment of an active energy ray-curable ink composition, and one embodiment of a process for producing an active energy ray-curable ink composition will now be described. It should be noted that the present invention is not limited to the following embodiments or aspects, and can be implemented with appropriate modifications within the scope of the present invention. The polyester resin indicates a resin produced through polycondensation of polybasic acids and polyhydric alcohols, and the polyester resin according to the present invention indicates a resin produced through polycondensation in combination with oils or fats (or fatty acids contained in such oils or fats) in addition to polybasic acids and polyhydric alcohols as described above. Such a resin is also called "alkyd resin", and "polyester resin" in the present invention is thus synonymous with "alkyd resin".

### <Process for producing polyester resin>

One embodiment of the process for producing the inventive polyester resin will be described. The process for producing the inventive polyester resin includes a process for producing a polyester resin through heating a mixture containing an epoxidized oil or fat, a polybasic acid, and a polyhydric alcohol to subject to a transesterification reaction and a polycondensation reaction, wherein the epoxidized oil or fat has a peroxide value of 1 meq/kg or more.

Epoxidized oil or fat is ester formed by a reaction of fatty acid having at least one epoxy group with alcohol. In general, "oil or fat" refers to ester of fatty acid and glycerol, in other words, triglyceride. In the present invention, ester of fatty acid and alcohol (regardless of monool or polyol) is referred to as "oil or fat" in a broad sense. Examples of such alcohols include, but not limited to, alcohols having 1 to 14 carbon atoms, such as glycerol, methanol, ethanol, propanol, 2-propanol, and 2-ethylhexanol. In the case that polyhydric alcohol, such as glycerol, is used, at least one fatty acid having at least one epoxy group may be condensed (that is, form an ester bond) or multiple fatty acids having at least one epoxy group may be condensed with the polyhydric alcohol. In such a case, each of fatty acids may be independently selected. Examples of such oils or fats include triglycerides, such as vegetable oils and animal oils, as well as esters (i.e., fatty acid esters) formed by a reaction of fatty acids derived from, for example, vegetable oils and animal oils with monohydric or dihydric alcohols.

The inventive process for producing the polyester resin is particularly characterized by use of epoxidized oil or fat having a peroxide value of 1 meq/kg or more. Since oils or fats containing peroxide groups formed by oxidization has high polarity as already described, polyester resins prepared using such oils or fats as raw materials similarly has peroxide groups and thus exhibits high polarity, resulting in high compatibility with active energy ray-curable ink compositions, which also have high polarity. Accordingly, active energy ray-curable ink compositions containing such polyester resins can have high flowability and provide improved gloss on printed matter. In addition, the epoxidized oils or fats are derived from animal oils or vegetable oils, which are renewable raw materials, and thereby contribute to an increase in biomass count in the ink composition.

Epoxidized oils or fats having a peroxide value of 1 meq/kg or more are prepared through epoxidation of oils or fats having a peroxide value of 1 meq/kg or more, that is, triglycerides or fatty acid esters modified therefrom. The peroxide value is also called "POV", and it is an index representing the degree of oxidation of oils or fats. As is well known, the peroxide value can be determined by the titration of free iodine (I₂) with a 0.01N sodium thiosulfate solution after reaction of potassium iodide with the oil or fat to be measured. In other words, the hydroperoxide groups contained in the oil or fat are replaced with iodine molecules (I₂), and titrated with a sodium thiosulfate solution based on the behavior where iodine molecules react with starch to change into blue-purple color to measure the amount consumed by the titration until such color disappears and then determine the number of equivalents of the sodium thiosulfate. From the result of such titration, the milligram equivalent (meq) of the peroxide contained in 1 kg of oil or fat is calculated to be the peroxide value (unit: meq/kg).

An epoxy group is a three-membered cyclic ether (also called "oxirane" or "alkylene oxide") where an oxygen atom is attached to both of two carbon atoms that are bonded to each other. Epoxidized oils or fats can be prepared in a variety of processes. For example, the epoxidized oil or fat where the oil or fat is triglyceride can be prepared by oxidization of vegetable oil or animal oil having unsaturated bonds in the fatty acid moieties with an appropriate oxidizing agent or peroxide. Epoxidized oil or fat where the oil or fat is not triglyceride can be prepared by esterification, transesterification or ester exchange reaction of fatty acid having unsaturated bonds with alcohol (regardless of monool or polyol) into fatty acid ester, followed by oxidization of such fatty acid ester with an appropriate oxidizing agent or peroxide. Such processes are merely exemplary, and other processes can also be employed.

Examples of epoxidized oils or fats include epoxidized soybean oil (ESO), epoxidized corn oil, epoxidized sunflower oil, epoxidized linseed oil, epoxidized canola oil, epoxidized rapeseed oil, epoxidized safflower oil, epoxidized tall oil, epoxidized tung oil, epoxidized fish oil, epoxidized beef tallow oil, epoxidized castor oil, epoxidized methyl stearate, epoxidized butyl stearate, epoxidized 2-ethylhexyl stearate, epoxidized stearyl stearate, 3,4-epoxycyclohexylmethyl-3,4-epoxycyclohexanecarboxylate epoxidized soybean oil, epoxidized propylene glycol dioleate, epoxidized palm oil, and epoxidized fatty acid methyl ester.

In order to prepare epoxidized oil or fat having a peroxide value of 1 meq/kg or more, waste edible oil exposed at high temperatures during cooking of, for example, fried foods may be used as a raw material and epoxidized. Since oils or fats aged and then oxidized while being left and oils or fats exposed to direct sunlight and then oxidized similarly have peroxide groups, they can also be employed through epoxidation. In addition, oils or fats oxidized by intentional oxidative processes can also be employed through epoxidation. Among these oils or fats, it is preferred that epoxidized oils or fats are prepared with waste edible oil as raw material from the viewpoint where the environmental loads of the ink composition as a whole can be reduced in a form of effective utilization of wastes.

Examples of oils or fats to be subjected to epoxidation include edible oils, such as salad oil, corn oil, olive oil, soybean oil, maize oil, sunflower oil, canola oil, rapeseed oil, safflower oil, fish oil, and beef tallow oil, as well as linseed oil, tung oil, tall oil, and castor oil. Such oils or fats to be subjected to epoxidation also include fatty acid esters prepared by transesterification of the oils or fats described above. As already described, the epoxidized oil or fat according to the present invention may be derived from waste edible oils used in heat-cooking. Examples of such waste edible oils include used edible oils after cooking of side dishes in eating-houses, fast food shops, restaurants, convenience stores or supermarkets; used edible oils after cooking in homes; and discarded edible oils after being heat-treated at high temperatures for cooking fried chicken, fried potatoes or tempura. The use of such epoxidized oils or fats derived from waste edible oils in the inventive ink composition can lead to effective utilization of food wastes and great reductions in environmental loads. Moreover, the waste edible oils are not limited to those used in cooking as described above, and they may be, for example, edible oils that are highly oxidized after being left for a long time under direct sunlight. The waste edible oils may also be procured from the recyclers who collect waste edible oils from, for example, eating-houses and recycle them.

The upper limit of peroxide value of the epoxidized oil or fat is preferably about 1,000 meq/kg, more preferably about 800 meq/kg, further more preferably about 700 meq/kg. The lower limit of peroxide value of the epoxidized oil or fat is 1 meq/kg as described above, but preferably about 10 meq/kg, more preferably about 30 meq/kg.

In the meantime, oils or fats exposed or aged at high temperatures are known to be partially decomposed to have some acid value (this phenomenon is called "rancidity"). Similar to the hydroperoxide groups described above, the acidic substituents that impart some acid value also have high polarity, and polyester resins derived from oils or fats rich in such groups exhibit high compatibility with active energy ray-curable ink compositions. Accordingly, the epoxidized oil or fat employed in the present invention preferably has a certain level of acid value. From such a viewpoint, the epoxidized oil or fat has an acid value of preferably 0.1 mg KOH/g to 100 mg KOH/g, more preferably 0.5 mg KOH/g to 50 mg KOH/g, further more preferably 0.5 mg KOH/g to 25 mg KOH/g.

The oxirane oxygen concentration, which represents the content of epoxy groups contained in the epoxidized oil or fat, is preferably 0.5% to 50%, more preferably 0.5% to 25%, further more preferably 1% to 10%.

Polybasic acid is a compound having multiple carboxy groups, and is an ingredient to increase the molecular weight through polycondensation with polyhydric alcohol described later. The compound having multiple carboxy groups may be any compound that has been used in the synthesis of polyester resins, and may be a compound having two or more carboxy groups or acid anhydrides thereof.

Examples of such compounds include phthalic anhydride, isophthalic acid, terephthalic acid, adipic acid, trimellitic acid, 1,2-cyclohexanedicarboxylic acid, 1,2-cyclohexenedicarboxylic acid, 1,3-cyclohexenedicarboxylic acid, 1,4-cyclohexenedicarboxylic acid, hexahydrophthalic anhydride, 5-sodiosulfoisophthalic acid, fumaric acid, benzoic acid, tert-butylbenzoic acid, tetrahydrophthalic anhydride, maleic anhydride, succinic acid, succinic anhydride, fumaric acid, sebacic acid, azelaic acid, tetrabromophthalic anhydride, methylhimic anhydride, tetrachlorophthalic anhydride, hexahydrophthalic anhydride, pyromellitic anhydride, trimellitic anhydride, and methylcyclohexenedicarboxylic anhydride. These compounds may be used alone or in combination.

Polyhydric alcohols form esters with acid ingredients containing fatty acids and polybasic acids generated from the epoxidized oils or fats described above to increase the molecular weight of these ingredients. The polyhydric alcohol may be any alcohol that have been used in the synthesis of polyester resins, and may be a compound having two or more hydroxyl groups.

Examples of such compounds include ethylene glycol, 1,3-propanediol, 1,2-propanediol, 1,4-butanediol, diethylene glycol, triethylene glycol, polyethylene glycol, dipropylene glycol, 1,3-butanediol, neopentyl glycol, spiro glycol, dioxane glycol, adamantanediol, 3-methyl-1,5-pentanediol, methyloctanediol, 1,6-hexanediol, 1,4-cyclohexanedimethanol, 2-methylpropanediol 1,3,3-methylpentanediol 1,5, hexamethylene glycol, octylene glycol, 9-nonanediol, 2,4-diethyl-1,5-pentanediol, ethylene oxide modified compounds of bifunctional phenols such as bisphenol A, propylene oxide modified compounds of bifunctional phenols such as bisphenol A, ethylene oxide of bisphenol A, propylene oxide copolymer-modified compounds, copolymerized polyether polyol of ethylene oxide and propylene oxide, polycarbonate diol, adamantane diol, polyether diol, polyester diol, and polycaprolactone diol. These compounds may be used alone or in combination.

Polyester resins are synthesized through transesterification and polycondensation reactions with heating of a mixture containing epoxidized oil or fat, polybasic acid and polyhydric alcohol. In such synthesis, it is preferred that resin acid (i.e., rosin) is further contained as part of the mixture. In the preparation of polyester resins using the resin acid in addition to the epoxidized oil or fat, the polybasic acid and the polyhydric alcohol, a structure derived from the resin acid is incorporated in the molecule of the polyester resin prepared, and thereby the polyester resins have an improved affinity for pigments, and an increased proportion of biomass-derived ingredients.

Resin acids include abietic acid contained in rosins, isomers thereof and derivatives therefrom. Rosins are non-volatile ingredients of pine resin collected from the plants of the pine family, and are mainly composed of abietic acid and isomers thereof. Examples of abietic acid and isomers thereof include abietic acid, neoabietic acid, parastric acid, pimaric acid, isopimaric acid, and dehydroabietic acid, each of which has carboxy groups and can form ester by a reaction with the polyhydric alcohol or alcohol generated through transesterification of the epoxidized oil or fat.

Although the abietic acid and isomers thereof described above contain only one carboxy group, modification of such acids and isomers can cause multiple carboxy groups to be incorporated. For example, abietic acid, which is a trans-diene compound, can be isomerized to a cis-diene compound by heating. The resultant cis-diene compound can be subjected to a Diels-Alder reaction together with a dienophile compound having multiple carboxyl groups, such as maleic acid and 1,2-cyclohexenedicarboxylic acid, to incorporate multiple carboxyl groups into the skeleton of abietic acid. Polymerized rosin is synthesized through polymerization of multiple molecules of abietic acid or isomers thereof, and such a compound also has multiple carboxy groups. The derivatives from abietic acid and isomers thereof described above correspond to such compounds.

Since rosins are mainly composed of resin acids, rosins themselves in place of the resin acids described above can be used in the synthesis. In the present invention, resin acids include such rosins. Several types of rosins are known depending on processes for production and subsequent chemical treatments, and any rosin may be employed in the present invention. Examples of such rosins include gum rosins, wood rosins, tall rosins, disproportionated rosins, hydrogenated rosins and polymerized rosins. Furthermore, rosins may be modified by a Diels-Alder reaction as described above. From the viewpoint of storage stability, it is preferred to use rosins that chemically have no or few conjugated double bonds. Examples of such rosins include disproportionated rosins and hydrogenated rosins. Although rosins having conjugated double bonds are slightly inferior in storage stability of resins synthesized, they can be used with no problems.

In the process for producing the inventive polyester resin, various fatty acids may be used as needed, in addition to the ingredients described above, to synthesize the polyester resin. Examples of such fatty acids include caprylic acid, pelargonic acid, lauric acid, myristic acid, pentadecylic acid, palmitic acid, margaric acid, stearic acid, oleic acid, linoleic acid, arachidic acid, and behenic acid.

The proportion (%) of the total mass of the fatty acid contained in the epoxidized oil or fat or the fatty acid optionally added as described above to the mass of the entire polyester resin is referred to as "oil length". From the viewpoint to increase the proportion of biomass ingredient in the resultant polyester resin, epoxidized oil or fat or fatty acid preferably should be employed such that the oil length is about 5 to 85, more preferably about 10 to 50.

In order to adjust the molecular weight of the rosin-modified polyester resin to be prepared, monobasic acid other than the fatty acid may also be added as an acid ingredient. Examples of such monobasic acid include benzoic acid, acetic acid, propionic acid, and butyric acid.

Polyester resins are prepared through mixing the ingredients described above, followed by heating. A reaction procedure includes the steps of: optionally adding a small amount of a solvent such as xylene into a reaction vessel charged with these raw materials; and then heating the mixture with feeding of an inert gas such as nitrogen gas to polycondense it while removing water by azeotroping with condensed water. The conditions of such reaction include a temperature of about 170 to 250°C and a duration of about 5 to 25 hours, although which conditions are not essential. Completion of the reaction can be determined by monitoring the acid value of the reaction mixture over the course of reaction time. In other words, the point when a decrease in acid value of the reaction mixture accompanied with polycondensation stops may be regarded as completion of the reaction. The polycondensation reaction can be carried out in a shorter time by distilling off the system the water generated due to the polycondensation or by employing a reaction catalyst. Examples of the reaction catalyst include triphenylphosphine, tetrabutyl zirconate, monobutyltin oxide, zirconium naphtate, and tetrabutyl titanate.

The polyester resin prepared through the polycondensation reaction preferably has a weight average molecular weight of about 1,000 to 100,000. Since the weight average molecular weight of polyester resin is determined by the molar balance between the acid ingredient and the polyhydric alcohol, it is desired that the initial synthesis is carried out in a small scale to determine, for example, the conditions of the reaction and the types of raw materials for large-scale synthesis.

The polyester resin prepared through the polycondensation reaction preferably has an acid value of 1 to 50 mg KOH/g. The acid value of 50 mg KOH/g or less can prevent troubles, such as abnormal emulsification, in the case that the polyester resin is used in, for example, an ink composition for offset printing. Such acid value is preferably 1 to 25 mg KOH/g, more preferably 1 to 10 mg KOH/g. Since the acid value of the rosin-modified polyester resin at the end of the reaction is determined by the molar balance between the acid ingredient and the polyhydric alcohol, it is desired that the initial synthesis is carried out on a small scale to determine, for example, the conditions of the reaction and the types of raw materials for large-scale synthesis.

### <Polyester resin>

One embodiment of the inventive polyester resin will be described. The inventive polyester resin is prepared by the process for production described above, which resin relates to one aspect of the present invention. The inventive polyester resin is characterized by a condensation polymer of an acid ingredient including a fatty acid containing an epoxy group and a polybasic acid, and a polyhydric alcohol, wherein the fatty acid has a peroxide value of 1 meq/kg or more in terms of triglyceride. In the following explanation, the redundant descriptions of portions that overlap with those of the process for producing the polyester resin already described will be omitted as appropriate.

The inventive polyester resin has high polarity because epoxidized oil or fat having a peroxide value of 1 meq/kg or more is used as one of the raw materials, and exhibits high compatibility with an active energy ray-curable ink composition similarly composed of highly polar materials. For this reason, the inventive polyester resin is preferably used in the preparation of the active energy ray-curable ink composition, and the active energy ray-curable ink composition containing such polyester resin has superior flowability and high gloss on printed matter, thereby contributing to an improvement in processability for printing and production of high value-added printed matter. Since the inventive polyester resin contains a large amount of biomass-derived raw materials, it can increase the overall content of biomass-derived ingredients in the ink composition containing such polyester resin.

The inventive polyester resin is a condensation polymer of an acid ingredient including fatty acid containing an epoxy group and a polybasic acid, and a polyhydric alcohol. The fatty acid containing an epoxy group is derived from the epoxidized oil or fat in the inventive process for production described above, and is prepared through the transesterification of the epoxidized oil or fat by heating of a mixture containing the epoxidized oil or fat in the process for production described above. "The fatty acid has a peroxide value of 1 meq/kg or more in terms of triglyceride" indicates that the epoxidized oil or fat has a peroxide value of 1 meq/kg or more before the epoxidized oil or fat is converted into fatty acid containing an epoxy group through transesterification. Since the significance that the epoxidized oil or fat should have a peroxide value of 1 meq/kg and the outline of the epoxidized oil or fat are already described, the redundant description is omitted in this paragraph. Since the outline of the polybasic acid and the polyhydric alcohol is also already described, the redundant description is omitted in this paragraph.

It is preferred that the inventive polyester resin further contains resin acid as the acid ingredient described above. Since such acid ingredient is already described, the redundant description is omitted in this paragraph.

### <Active energy ray-curable ink composition>

An active energy ray-curable ink composition is characterized by containing of the inventive polyester resin, which composition also relates to one aspect of the present invention. As already described, the inventive polyester resin has a high proportion of biomass-derived ingredients as a raw material, and can increase the proportion of biomass-derived ingredients contained in the ink composition. Accordingly, such ink composition has reduced environmental loads and is a product suitable for complying with various environmental certifications, such as IG mark certification. As already described, the inventive polyester resin can also be prepared with epoxidized oils or fats derived from waste edible oil used in cooking of, for example, fried foods. In this case, further reductions in the environmental loads of the ink composition can be achieved.

In addition, as already described, the inventive polyester resin has superior compatibility with the monomers or oligomers contained in the active energy ray-curable ink composition, whereby the active energy ray-curable ink composition containing such polyester resin has high flowabiliity, resulting in an improvement in gloss on printed matter, which is printed with such ink composition. Typical examples of active energy ray-curable ink compositions are illustrated below.

The active energy ray-curable ink composition mainly contains a compound having one or more ethylenically unsaturated bonds and an optional coloring ingredient. The inventive ink composition containing a coloring ingredient is used in print of characters and images, while the inventive ink composition containing no coloring ingredient is used in coating. The inventive ink composition contains the inventive polyester resin described above in addition to these ingredients. Preferred examples of active energy rays used for curing include ultraviolet rays and electron beams. In the use of ultraviolet rays as the active energy rays, the wavelength of the ultraviolet rays may be appropriately determined depending on the absorption wavelength of the photopolymerization initiator to be employed, and it may be 400 nm or less. Examples of light sources that generates such ultraviolet rays in an ultraviolet irradiator include metal halide lamps, high-pressure mercury lamps, excimer lamps containing rare gas, and ultraviolet light emitting diodes (ultraviolet LEDs). In the use of electron beams as the active energy rays, any accelerator can be employed in an electron beam irradiator for generating the electron beams. Examples of such accelerators include a Cockroft-Walton accelerator, a Van de Graaff accelerator, and an accelerator with a resonant transformer. The electron beams have an energy of preferably 50 to 1,000 eV, more preferably 100 to 300 eV. Regardless of the type of active energy rays, the dose of irradiation should be appropriately adjusted depending on the degree of curing of the ink composition. In the case that ultraviolet rays are employed as the active energy rays, a photopolymerization initiator described later is added to the ink composition, and the photopolymerization initiator undergoes intramolecular cleavage upon the irradiation with ultraviolet rays to generate radicals, thereby curing the ink composition. In the case that electron beams are employed as the active energy rays, various ingredients contained in the ink composition undergo intramolecular cleavage upon the irradiation with electron beams to generate radicals, thereby curing the ink composition. Accordingly, in the case that electron beams are selected as the active energy rays, the photopolymerization initiator is not an essential ingredient in the ink composition.

The compound having one or more ethylenically unsaturated bonds is an ingredient called a monomer or an oligomer that is polymerized by radicals generated in the ink composition into a high molecular weight. Various polymers having ethylenically unsaturated bonds, which have a higher molecular weight than oligomers, are also commercially available. Such polymers can also be crosslinked with themselves or with the monomers or oligomers into a higher molecular weight. Such polymers may also be used as compounds having ethylenically unsaturated bonds together with the monomers or oligomers.

The monomer having one or more ethylenically unsaturated bonds can be polymerized into a high molecular weight, as described above. In many cases, the monomer is a liquid ingredient having a relatively low molecular weight before polymerization and is also used as a solvent for dissolving a resin ingredient into a varnish or for adjusting the viscosity of the ink composition. Examples of such monomers include monofunctional monomers having one ethylenically unsaturated bond in the molecule and bi- or higher functional monomers having two or more ethylenically unsaturated bonds in the molecule. The bi- or higher functional monomers can mutually crosslink during the curing of the ink composition, thereby contributing to an increase in curing rate and formation of a rigid film. The monofunctional monomer has no crosslinking ability as described above, thereby contributing to a reduction in curing contraction due to crosslinking. These monomers can be used in combination of different types as needed.

Examples of the monofunctional monomers include alkyl acrylates, such as methyl (meth)acrylate, ethyl (meth)acrylate, butyl (meth)acrylate, hexyl (meth)acrylate, octyl (meth)acrylate, dodecyl (meth)acrylate; and (meth)acrylic acid, ethylene oxide adduct (meth)acrylate, propylene oxide adduct (meth)acrylate, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, di(ethylene glycol) mono(meth)acrylate, tri(ethylene glycol) mono(meth)acrylate, poly(ethylene glycol) mono(meth)acrylate, di(propylene glycol) mono(meth)acrylate, polypropylene glycol) mono(meth)acrylate, glycerol mono(meth)acrylate, acryoloxyethyl phthalate, 2-(meth)acryloyloxyethyl-2-hydroxyethyl phthalate, 2-(meth)acryloyloxypropyl phthalate, β-carboxyethyl (meth)acrylate, (meth)acrylate dimer, ω-carboxypolycaprolactone mono(meth)acrylate, dimethylaminoethyl (meth)acrylate, diethylaminoethyl (meth)acrylate, N-vinylpyrrolidone, N-vinylformamide, and (meth)acryloylmorpholine. These monofunctional monomers may be used alone or in combination.

Examples of the di- or higher functional monomers include difunctional monomers, such as ethylene glycol di(meth)acrylate, di(ethylene glycol) di(meth)acrylate, tri(ethylene glycol) di(meth)acrylate, poly(ethylene glycol) di(meth)acrylate, propylene glycol di(meth)acrylate, di(propylene glycol) di(meth)acrylate, tri(propylene glycol) di(meth)acrylate, polypropylene glycol) di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaplolactonate di(meth)acrylate, bisphenol A tetra(ethylene oxide) adduct di(meth)acrylate, bisphenol F tetra(ethylene oxide) adduct di(meth)acrylate, bisphenol S tetra(ethylene oxide) adduct di(meth)acrylate, hydrogenated bisphenol A tetra(ethylene oxide) adduct di(meth)acrylate, hydrogenated bisphenol F tetra(ethylene oxide) adduct di(meth)acrylate, hydrogenated bisphenol A di(meth)acrylate, hydrogenated bisphenol F di(meth)acrylate, bisphenol A tetra(ethylene oxide) adduct dicaplolactonate di(meth)acrylate, and bisphenol F tetra(ethylene oxide) adduct dicaplolactonate di(meth)acrylate; and trifunctional monomers, such as glycerol tri(meth)acrylate, trimethylolpropane tri(meth)acrylate, trimethylolpropane tricaplolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and tetra- or higher functional monomers, such as trimethylolpropane tetra(meth)acrylate, pentaerythritol tetra(meth)acrylate, pentaerythritol tetracaplolactonate tetra(meth)acrylate, diglycerol tetra(meth)acrylate, ditrimethylolpropane tetra(meth)acrylate, ditrimethylolpropane tetracaplolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tridipentaerythritol hexa(meth)acrylate, tripentaerythritol hepta(meth)acrylate, tripentaerythritol octa(meth)acrylate, and tripentaerythritol poly(alkylene oxide) hepta(meth)acrylate. Among these monomers, preferred examples include trimethylolpropane triacrylate (TMPTA; trifunctional), ditrimethylolpropane tetraacrylate (DITMPTA; tetrafunctional), dipentaerythritol hexaacrylate (DPHA; hexafunctional), glycerol propoxytriacrylate (GPTA; trifunctional), and hexanediol diacrylate (HDDA; difunctional). These di- or higher functional monomers may be used alone or in combination.

Examples of other types of monomers include acrylates of epoxidized vegetable oils prepared through acrylic modification of epoxidized vegetable oils. These acrylates are compounds produced by ring-opening addition polymerization of (meth)acrylates to epoxy groups in the epoxidized vegetable oils prepared through epoxidation of double bonds in unsaturated vegetable oils with oxidizing agents, such as peracetic acid and perbenzoic acid. The unsaturated vegetable oil indicates triglyceride including at least one fatty acid having at least one carbon-carbon unsaturated bond. Examples of the unsaturated vegetable oils include hemp seed oil, linseed oil, perilla oil, oiticica oil, olive oil, cacao oil, kapok oil, kaya oil, mustard oil, apricot oil, tung oil, kukui oil, walnut oil, poppy oil, sesame oil, safflower oil, radish seed oil, soybean oil, hydnocarpus oil, camellia oil, corn oil, rapeseed oil, niger oil, rice-bran oil, palm oil, castor oil, sunflower oil, grape seed oil, almond oil, pine seed oil, cottonseed oil, coconut oil, peanut oil, and dehydrated castor oil. Since this type of monomer is derived from the vegetable oil, it serves to increase the amount of biomass ingredients in the ink composition. Several types of acrylates of epoxidized vegetable oils, which are commercially available, may be used.

The oligomer is a polymerized ingredient that has a high molecular weight, as described above. Since the oligomer inherently has a relatively high molecular weight, it can be used for imparting appropriate viscosity and elasticity to the ink composition. Examples of the oligomers include epoxy-modified (meth)acrylates, such as esters formed by a reaction of (meth)acrylates with hydroxyl groups generated after opening, in the presence of acid or base, of the epoxy rings contained in epoxy compounds, such as epoxy resins; rosin-modified epoxidized acrylates; polyester-modified (meth)acrylates, such as esters formed by a reaction of (meth)acrylate with terminal hydroxyl groups of condensates of dibasic acids and diols; polyether-modified (meth)acrylates, such as esters formed by a reaction of (meth)acrylates with terminal hydroxyl groups of polyether compounds; and urethane-modified (meth)acrylates, such as esters formed by a reaction of (meth)acrylates with terminal hydroxyl groups of condensates of polyisocyanate compounds and polyol compounds. Such oligomers are commercially available under trade names, for example, Evecryl series available from Daicel Cytech Co., Ltd.; CN and SR series available from Sartomer Co., Ltd.; Aronix M-6000 series, 7000 series, 8000 series, Aronix M-1100, Aronix M-1200, and Aronix M-1600 available from Toagosei Co., Ltd.; and NK Oligo available from Shin-Nakamura Chemical Co., Ltd. These oligomers may be used alone or in combination.

The polymer having ethylenically unsaturated bonds is an ingredient that increases the molecular weight together with the monomers and oligomers described above. Since the polymer has a high molecular weight even before irradiation with active energy rays, it serves an enhancement in viscoelasticity of the ink composition. Such a polymer is used, for example, in a form of solution or dispersion in monomers, which are low-viscous liquid. Examples of the polymers having ethylenically unsaturated bonds include poly(diallyl phthalate); acrylic resins including unreacted and unsaturated groups; and acryl-modified phenol resins. Among these polymers, poly(diallyl phthalate) can be preferably used because of its particularly superior compatibility with the monomers or oligomers described above.

The content of the compound having one or more ethylenically unsaturated bonds in the ink composition is preferably 30 to 70% by mass, more preferably 40 to 60% by mass. Such a range of content of the compound having one or more ethylenically unsaturated bonds results in compatibility between high curability and superior printability. The content of the polymer having ethylenically unsaturated bonds is preferably 0 to 50% by mass, more preferably 0 to 30% by mass, further more preferably 0 to 20% by mass. Such a range of content of the polymer preferably results in high curability of the ink composition, as well as a reduction in misting through imparting appropriate viscoelasticity to the ink composition.

The photopolymerization initiator is an ingredient that generates radicals by irradiation with ultraviolet rays, and the resultant radicals polymerize the compound having one or more ethylenically unsaturated bonds described above, thereby curing the ink composition. The photopolymerization initiator may be any material that generates radicals by irradiation with ultraviolet rays. The photopolymerization initiator is an essential ingredient for curing the ink composition in the case that ultraviolet rays are employed as the active energy rays, but is a non-essential or optional ingredient in the case that electron beams are employed as the active energy rays.

Examples of the photopolymerization initiators include benzophenone, diethylthioxanthone, 2-methyl-1-(4-methylthio)phenyl-2-morpholinopropan-1-one, 4-benzoyl-4'-methyldiphenylsulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenyl phosphine oxide, and 2-benzyl-2-dimethylamino-1-(morpholinophenyl)-butan-1-one. Such photopolymerization initiators are commercially available under trade names, for example, Omnirad 907, Omnirad 369, Omnirad 184, Omnirad 379, Omnirad 819, and Omnirad TPO available from IGM Resins B. V.; and DETX available from Lamberti S.p.A. These photopolymerization initiators can be used alone or in combination.

The content of the photopolymerization initiator in the ink composition is preferably 1 to 20% by mass, more preferably 2 to 15% by mass, further more preferably 2 to 13% by mass. Such a range of content of the photopolymerization initiator in the ink composition preferably results in sufficient curing of the ink composition and compatibility between satisfactory internal curability and material costs. In addition, since the inventive ink composition contains the epoxidized oil or fat as described later, it has improved curability by irradiation with ultraviolet rays, resulting in a reduction in the content of the photopolymerization initiator compared to conventional ink compositions. Accordingly, it is preferred that the amount of the photopolymerization initiator used is appropriately reduced in view of the actual conditions for printing.

Coloring ingredients may be added to the inventive ink composition as needed. The coloring ingredients are added to impart, for example, coloring power and hiding power to the ink composition, and include color pigments, white pigments, and metal powder. Examples of such coloring ingredients include, but not limited to, conventional organic and/or inorganic pigments employed in ink compositions. The inventive ink composition containing no coloring ingredients is preferably used for applications, such as coating layer.

Examples of the coloring ingredients include yellow pigments, such as Disazo Yellows (Pigment Yellow 12, Pigment Yellow 13, Pigment Yellow 14, Pigment Yellow 17, and Pigment Yellow 1) and Hansa Yellow; magenta pigments, such as Brilliant Carmine 6B, Lake Red C, and Watching Red; cyan pigments, such as phthalocyanine blue, phthalocyanine green, and alkali blue; black pigments, such as carbon black; white pigments, such as titanium oxide; and metal powder, such as aluminum paste and bronze powder.

The content of coloring ingredients is, for example, about 1 to 30% by mass to the entire ink composition, although such a content is not essential. Colored ink compositions may also be prepared in combination of other complementary coloring ingredients or other complementary colored ink compositions.

The inventive ink composition contains the inventive polyester resin described above. If the polyester resin is liquid, such resin may be added as it is to the ink composition, otherwise such resin may be added in the form of a vanish prepared by being dissolved in low viscous monomers, such as ditrimethylolpropane triacrylate and ditrimethylolpropane tetraacrylate.

The content of the inventive polyester resin added to the ink composition is preferably about 5 to 40% by mass, more preferably about 5 to 30% by mass, further more preferably about 10 to 30% by mass.

The inventive ink composition may further contain any other ingredient as needed, in addition to the ingredients described above. Examples of such other ingredients include extender pigments, resin ingredients, polymerization inhibitors, dispersants, salts such as phosphates, waxes, such as polyethylene wax, olefin wax and Fischer-Tropsch wax, and alcohols.

The extender pigments impart appropriate properties, such as printability and viscoelasticity, to ink compositions, and various types of extender pigments commonly used in the preparation of ink compositions can be employed. Examples of the extender pigments include clay, kaolinite (kaolin), barium sulfate, magnesium sulfate, calcium carbonate, silicon oxide (silica), bentonite, talc, mica, and titanium oxide. The content of such extender pigments is, for example, about 0 to 33% by mass to the entire ink composition, although such a content is not essential.

The resin ingredients impart appropriate properties, such as printability and viscoelasticity, to ink compositions. Such resin ingredients include various resins that have been conventionally used in the ink compositions for printing, and preferably have compatibility with monomers or oligomers. Examples of the resin ingredients include styrene-acrylic resins, acrylic resins, alkyd resins, rosin-modified phenol resins, rosin-modified maleic resins, rosin-modified alkyd resins, rosin-modified petroleum resins, rosin ester resins, petroleum resin-modified phenol resins, vegetable oil-modified alkyd resins, and petroleum resins.

In the case that the resin ingredient is added to the ink composition, the content of the resin ingredient in the ink composition is preferably 1 to 30% by mass, more preferably 1 to 20% by mass, further more preferably 1 to 10% by mass. Such a range of content of the resin ingredient preferably imparts appropriate viscoelasticity to the ink composition to prevent the occurrence of misting, and achieves high curability of the ink composition.

Examples of the polymerization inhibitors preferably include phenol compounds such as butylhydroxytoluene, tocopherol acetate, nitrosamine, benzotriazole, and hindered amine. More preferred is butylhydroxytoluene. The addition of such polymerization inhibitors to the ink composition can prevent an increase in viscosity of the ink composition caused by the progress of polymerization reaction during storage. The content of the polymerization inhibitor is, for example, about 0.01 to 1% by mass in the ink composition.

The dispersants are used to improve the dispersion of the coloring ingredients or extender pigments contained in the ink composition. Various types of dispersants are commercially available, for example, DISPERBYK^{™} series available from BYK Japan KK.

The inventive ink composition can be produced with the ingredients described above by a well-known process. For example, such a process involves the following steps of: mixing each ingredient described above; kneading the ingredients with, for example, a bead mill or a three-roll mill to disperse the pigments (i.e., the coloring ingredients and the extender pigments); optionally adding additives (e.g., polymerization inhibitors, alcohols, and waxes); and then adjusting the viscosity by the addition of monomer ingredients or oil ingredients. The viscosity of the ink composition for offset printing is, for example, 10 to 70 Pa s as measured with a Laray viscometer at 25°C, although such a value is not essential.

### <Process for producing active energy ray-curable ink composition>

One aspect of the present invention also provides a process for producing the active energy ray-curable ink composition. The inventive process for producing such an ink composition is characterized by use of polyester resin prepared by the process for producing polyester resin described above as part of the ingredients constituting the ink composition. Since the detail of the use of polyester resin has already been explained, the redundant description is omitted in this paragraph.

### EXAMPLES

The present invention will be described in further detail by way of the following examples, although the present invention should not be limited to these examples.

Potato slices with a thickness of 1 mm were placed into 500 mL of commercially available edible oil, and were heat-cooked at 180°C. This operation was repeated 5 to 100 times to prepare samples of waste edible oil having different peroxide values (POV). Such preparations produced two waste edible oils, OL1 and OL2, through variations in the type of edible oil and the number of heat-cooking cycles. OL1 is derived from salad oil available from The Nisshin OilliO Group, Ltd., and OL2 is derived from white refined soybean oil available from the same company. Waste edible oil (white refined soybean oil available from The Nisshin OilliO Group, Ltd.) used for cooking in the company cafeteria of Tokyo plant of Sakata Inx Corporation was collected and denoted by OL3. Another waste edible oil was procured from a recycling company for waste oil (Yoshikawa Yusi Co., Ltd.) and denoted by OL4. Furthermore, two fresh edible oils, which are commercially available, were denoted by OL5 and OL6. OL5 is salad oil available from The Nisshin OilliO Group, Ltd., and OL6 is white refined soybean oil available from the same company. Table 1 illustrates the specifications of OL1 to OL6.

**[Table 1]**

| | OL1 | OL2 | OL3 | OL4 | OL5 | OL6 |
|---|---|---|---|---|---|---|
| Iodine value | N/A | N/A | N/A | N/A | 120 | 122 |
| Peroxide value (meq/kg) | 30 | 650 | 25 | 10 | below 1 | below 1 |
| Oxirane oxygen conc. (%) | below 1 | below 1 | below 1 | below 1 | below 1 | below 1 |
| Acid value (mg KOH/g) | 5 | 25 | 5 | 3.9 | below 0.1 | below 0.1 |

OL1 to OL6 were epoxidized by a known process into epoxidized oils or fats denoted by EPOL1 to EPOL6, respectively. The epoxidized oil or fat prepared using OL1 as the oil or fat corresponds to EPOL1, and similarly, the epoxidized oils or fats prepared using OL2 to OL6 as the oils or fats correspond to EPOL2 to EPOL6, respectively. In addition, a commercially available epoxidized soybean oil was denoted by EPOL7. Table 2 illustrates the specifications of EPOL1 to EPOL7.

**[Table 2]**

| | EPOL 1 | EPOL2 | EPOL3 | EPOL4 | EPOL5 | EPOL6 | EPOL7 |
|---|---|---|---|---|---|---|---|
| Iodine value | N/A | N/A | N/A | N/A | 5.0 | 120 | 3 |
| Peroxide value (meq/kg) | 10 | 650 | 25 | 10 | below 1 | below 1 | below 1 |
| Oxirane oxygen conc. (%) | 5.2 | 5.2 | 6.5 | 6.5 | 7.2 | 3.1 | 8.5 |
| Acid value (mg KOH/g) | 7 | 32 | 5.2 | 3.9 | below 0.1 | below 0.1 | below 0.1 |

A polyester resin was prepared with each of EPOL1 to EPOL7 as epoxidized oil or fat. Into a reactor equipped with a stirrer, a reflux condenser, and a thermometer were added epoxidized oil or fat (125 parts by mass; any of EPOL 1 to 7), disproportionated rosin (375 parts by mass; trade name "Dehydroabietic Acid" available from Fujifilm Wako Pure Chemical Corporation, acid value of 136 mg KOH/g), triphenylphosphine (1.5 parts by mass), 1,2-cyclohexenedicarboxylic acid (25 parts by mass) and glycerol (25 parts by mass), and the mixture was reacted at 200°C for five hours under a nitrogen atmosphere to be subjected to transesterification and polycondensation (i.e., dehydration condensation) reactions into polyester resins of R1 to R7. The polyester resin prepared using EPOL1 as the epoxidized oil or fat corresponds to R1, and similarly, the polyester resins prepared using EPOL2 to EPOL7 as the epoxidized oils or fats correspond to R2 to R7, respectively. Table 3 illustrates the acid value and weight average molecular weight of the resultant polyester resins R1 to R7.

**[Table 3]**

| | R1 | R2 | R3 | R4 | R5 | R6 | R7 |
|---|---|---|---|---|---|---|---|
| Acid value (mg KOH/g) | 4.3 | 10.5 | 4.5 | 5.5 | 4.6 | 4.2 | 3.9 |
| Weight average molecular weight (Mw) ×10⁴ | 3.5 | 3.8 | 3.9 | 4.0 | 3.7 | 3.8 | 3.9 |

Varnishes were prepared with the polyester resins described above. Ditrimethylolpropane tetraacrylate (60 parts by mass) and butylhydroxytoluene (BHT; 0.15 parts by mass) were added to any of the polyester resins R1 to R7 (40 parts by mass), and the mixture was heated and stirred at 100°C for one hour into vanishes V1 to V7, respectively. The vanish prepared using R1 as the polyester resin corresponds to V1, and similarly, the varnishes prepared using R2 to R7 as the polyester resins correspond to V2 to V7, respectively.

Ink compositions of Examples 1 to 5 and Comparative Examples 1 to 4 were prepared with the resulting varnishes, V1 to V7. In the preparation of ink compositions, the ingredients shown in Tables 4 and 5 were mixed and then kneaded in a three-roll mill. In Table 4, amounts of the compounded ingredients are each represented by parts by mass. "Carbon black" is #60 available from Mitsubishi Chemical Co., Ltd., "Calcium carbonate" is Hakuenka DD available from Shiraishi Calcium Kaisha, Ltd., "DiTMPTA" indicates ditrimethylolpropane tetraacrylate, "Varnish" is any of the above V1 to V7 and which one was used for preparation is described along with the compounded amount, "TPO" indicates 2,4,6-trimethylbenzoyl-diphenyl phosphine oxide, and "EAB" indicates 4,4'-bis(diethylamino)benzophenone. Examples 1 to 4 and Comparative Examples 1 to 3 correspond to ink compositions that employ ultraviolet rays as the active energy rays and contain photopolymerization initiators (TPO and EAB), while Example 5 and Comparative Example 4 correspond to ink compositions that employ electron beams as the active energy rays and are free of photopolymerization initiators.

### [Evaluation of flowability]

For each of the ink compositions in Examples and Comparative Examples, the flow slope value as an index of the flowability was measured with a spread meter. The flow slope value is given by subtracting the diameter of spread in mm measured after 10 seconds from the diameter of spread in mm measured after 100 seconds with the spread meter, and a larger flow slope value indicates higher flowability. The flow slope values calculated are shown in the column "Flowability" of Tables 4 and 5.

### [Evaluation of gloss]

For each of the ink compositions in Examples 1 to 4 and Comparative Examples 1 to 3, 0.1 mL of ink composition was spread onto coated paper (Aurora Coat, available from Nippon Paper Industries Co., Ltd.) with an RI drawdown machine (Two-split roll, available from Akira Seisakusho Co., Ltd.) and then cured by irradiation with ultraviolet rays in an irradiation dose of 40 mJ/cm² at an output of 120 W/cm using a metal halide lamp. The density of ink composition was adjusted such that the density immediately after curing exhibited 1.50, the density being measured with a Spectroeye densitometer (available from GretagMacbeth GmbH). The 60°-reflected gloss of each spread surface was determined with a Murakami digital gloss meter (available from Murakami Color Research Laboratory). The results are shown in the column "Gloss" of Tables 4 and 5. For each of the ink compositions in Example 5 and Comparative Example 4, the gloss was evaluated as in the ink compositions of Examples 1 to 4 and Comparative Examples 1 to 3, except that the compositions were cured by irradiation with electron beams from an electron beam irradiator (accelerating voltage: 90 kV, irradiation light dose: 30 kGy) in place of irradiation with ultraviolet rays. The results are shown in the column "Gloss" of Tables 4 and 5.

**[Table 4]**

| | Example 1 | Example 2 | Example 3 | Example 4 | Example 5 |
|---|---|---|---|---|---|
| Carbon black | 22 | 22 | 22 | 22 | 22 |
| Calcium carbonate | 3 | 3 | 3 | 3 | 3 |
| DiTMPTA | 14 | 14 | 14 | 14 | 25 |
| Vanish | V1; 50 | V2; 50 | V3; 50 | V4; 50 | V1; 50 |
| TPO | 8 | 8 | 8 | 8 | |
| EAB | 3 | 3 | 3 | 3 | |
| Total | 100 | 100 | 100 | 100 | 100 |
| Flowability | 10.5 | 13.5 | 10.3 | 10.2 | 10.6 |
| Gloss (40mJ/m²) | 50 | 58 | 55 | 56 | |
| Gloss (30 kGy) | | | | | 54 |

**[Table 5]**

| | Comparative Example 1 | Comparative Example 2 | Comparative Example 3 | Comparative Example 4 |
|---|---|---|---|---|
| Carbon black | 22 | 22 | 22 | 22 |
| Calcium carbonate | 3 | 3 | 3 | 3 |
| DiTMPTA | 14 | 14 | 14 | 25 |
| Vanish | V5; 50 | V6; 50 | V7; 50 | V5; 50 |
| TPO | 8 | 8 | 12 | |
| EAB | 3 | 3 | 3 | |
| Total | 100 | 100 | 104 | 100 |
| Flowability | 2.2 | 2.1 | 3.3 | 2.2 |
| Gloss (40mJ/m²) | 32 | 32 | 33 | |
| Gloss (30 kGy) | | | | 30 |

Tables 4 and 5 demonstrate that the inventive ink compositions of Examples 1 to 4 exhibited higher flowability and superior gloss of cured film compared to the ink compositions of Comparative Examples 1 to 3, which did not contain the polyester resins derived from the epoxidized oils or fats having a peroxide value of 1 meq/kg or more. Such trends can also hold even in the case that electron beams are employed as the active energy rays, and the inventive ink composition of Example 5 exhibited higher flowability and superior gloss of cured film compared to the ink composition of Comparative Example 4, which did not contain the polyester resin derived from the epoxidized oil or fat having a peroxide value of 1 meq/kg or more. These results described above can confirm the usefulness of the inventive ink compositions containing specified polyester resins.

## Claims

1. A polyester resin that is a condensation polymer of an acid ingredient including a fatty acid containing an epoxy group and a polybasic acid, and a polyhydric alcohol, wherein the fatty acid has a peroxide value of 1 meq/kg or more in terms of triglyceride.

2. The polyester resin according to claim 1, wherein the acid ingredient further includes a resin acid.

3. An active energy ray-curable ink composition containing the polyester resin according to claim 1 or 2.

4. A process for producing a polyester resin through heating a mixture containing an epoxidized oil or fat, a polybasic acid, and a polyhydric alcohol to subject to a transesterification reaction and a polycondensation reaction, wherein the epoxidized oil or fat has a peroxide value of 1 meq/kg or more.

5. The process for producing a polyester resin according to claim 4, wherein the epoxidized oil or fat has an acid value of 0.1 mg KOH/g to 100 mg KOH/g.

6. The process for producing a polyester resin according to claim 4 or 5, wherein the epoxidized oil or fat has a peroxide value of 1 meq/kg to 1,000 meq/kg.

7. The process for producing a polyester resin according to any one of claims 4 to 6, wherein the epoxidized oil or fat has an oxirane oxygen concentration of 0.5% to 50%.

8. The process for producing a polyester resin according to any one of claims 4 to 7, wherein the mixture further contains a resin acid.

9. The process for producing a polyester resin according to any one of claims 4 to 8, wherein the epoxidized oil or fat is an epoxy-modified waste edible oil.

10. A process for producing an active energy ray-curable ink composition by use of the polyester resin produced through the process according to any one of claims 4 to 9 as one of constituents of the ink composition.
